# EUROPEAN PATENT SPECIFICATION

(11) **EP 0 547 252 B1**
(45) Date of publication and mention of the grant of the patent: **24.04.1996**
(21) Application number: 91121474.0
(22) Date of filing: 14.12.1991
(51) Int. Cl.: F16B 21/07, H01R 13/62, H01R 13/629

(54) **Latching arrangement particularly for injector connectors**
Verriegelungsvorrichtung, insbesondere für Einspritz-Stecker
Dispositif de verrouillage en particulier pour des connecteurs pour injection

(43) Date of publication of application: 23.06.1993
(73) Proprietor: MOLEX INCORPORATED, Lisle Illinois 60532 (US)
(72) Inventor: Schwarz, Uwe, W-7505 Ettlingen (DE); Manassero, Lorenzo, I-10100 Torino (IT)
(74) Representative: Blumbach, Kramer & Partner

(56) References cited:
- DE-U- 8 525 560
- DE-U- 8 710 462
- DE-U- 8 809 663
- US-A- 3 192 500

## Description

The invention relates to a latching arrangement for latching a housing member to a base member, particularly a receptacle housing to a fuel injector body, comprising a latching spring wire at one of the members for releasable locking retention means of the other member.

Connectors for fuel injector bodies are assembled and disassembled in very tight and hot areas on the cylinder head of car engines. Prior known electrical connectors for making contact to the electrical parts of the injector comprise a receptacle housing to be attached to the injector body and furthermore include a latching arrangement for locking the parts together to secure a reliable connection for a long time. For maintenance purposes or when replacing an injector, it is necessary to disassemble the receptacle housing from the injector body. The housings, however, are difficult to reach with the hands, and it is dangerous because of the high temperature of the surrounding engine parts. It is also difficult to use any kind of a tool to accomplish the release, because the unlocking action of prior known connectors has to take place by forces applied orthogonal to the longitudinal axis of the injector body, and there is not sufficient space in that area. Similar difficulties apply in other situations where housing members are to be connected and latched to a base member, for instance in industrial applications.

In the DE-U 87 10 462, there is disclosed an electrical connector arrangement comprising a plug portion and a socket housing at which the plug portion is releasably latched with a generally U-shaped latching spring on the socket housing. The latching spring is arranged in a groove of said socket housing and released when the free legs of the spring are forced apart.

A prior known arrangement for latching a connector receptacle housing to a fuel injector body comprises a plastic housing and a latching steel spring wire which releases the latch when the spring wire is pushed on one or both sides of the housing in a direction orthogonal to the housing. However, just the afore-mentioned difficulties and dangers apply for that prior known arrangement. The use of spring wires for latching or locking arrangements of electrical connectors is generally known, see for instance US-A-5,021,003 which describes an electrical connector with a locking plate having locking grooves which are engaged with a holder spring wire.

The problem underlying the subject invention is to provide a latching arrangement of the above described type which can be released by a simple way.

A solution of the problem is set forth by the features of claim 1.

In connection with the solution it is only necessary to insert the blade of a screw driver between the spring wire and the housing and to either turn the screw driver or use it as a lever in order to release the housing from the base member, for instance the fuel injector body. Improvements and further developments are characterized in dependent claims. The retention means can be formed by pegs of the base member which extend into holes of the housing member at opposite sides thereof. The spring wire legs engage shoulders of the pegs and are forced out of engagement when the spring wire is moved with a screw driver so that the ends of the spring wire legs positioned on respective ramps climb the ramps. The ends of the spring wire legs may be bent by 90 degrees to facilitate resting and sliding on the ramps. Furthermore, the ends of the spring wire legs may be additionally bent to form retaining hooks traveling in longitudinal grooves of the ramps. End walls of the grooves form stops for the retaining hooks so as to avoid a disassembly of the spring wire from the housing member. In order to allow an easy insertion of the blade of a tool the portion of the spring wire connecting its free legs can be bent to form a bracket.

A first preferred embodiment of the invention is described by referring to the drawings in which
- Fig. 1: is a perspective view of the first embodiment of the invention;
- Fig. 1a: is a perspective view of an injector body;
- Fig. 2: cross-sectional views of the first embodiment along line II-II in Fig. 3;
- Fig. 3: front elevation views of the first embodiment;
- Fig. 4: side elevation views of the first embodiment;

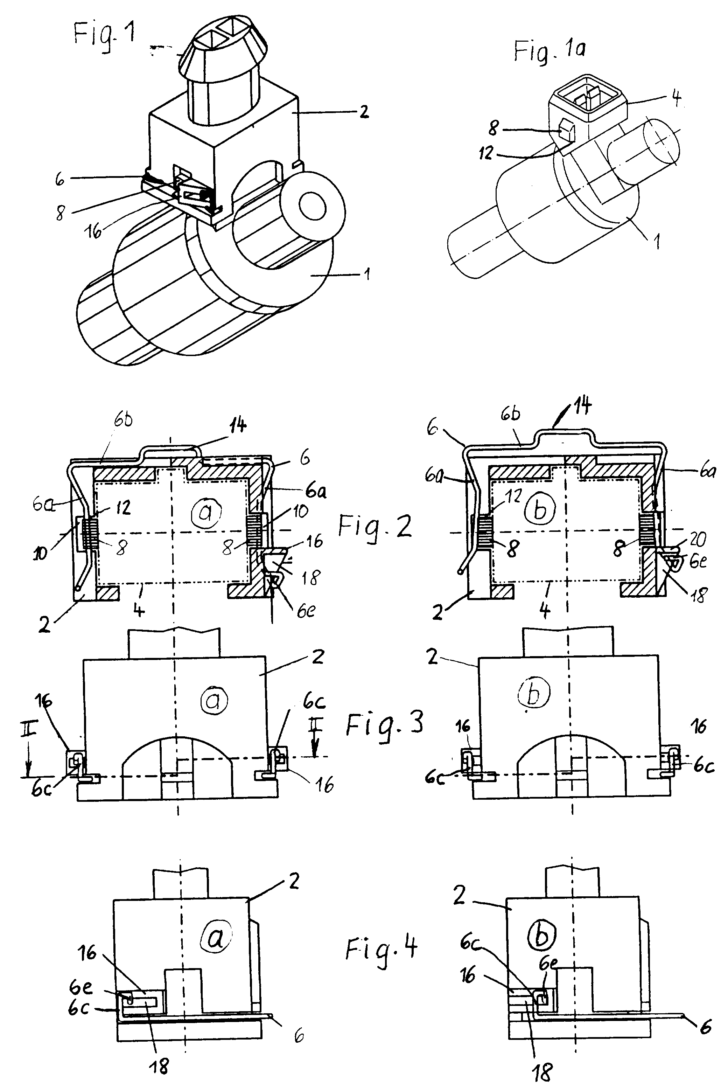

Figs. 1 and 1a show schematically the injector body 1 of a fuel injector for combustion engines. For making electrical connections to the electrical parts of the injector body 1, a receptacle housing 2 is latched by a first embodiment of the invention to a base 4 which is part of injector body 1. The latching arrangement according to the invention comprises a spring wire 6 which generally surrounds three sides of housing 2 and is made of steel.

In Figs. 2, 3 and 4 the left views a show the closed or locked position of housing 2 according to Fig. 1, and the right views b show the operated position of spring wire 6 for unlatching housing 2 from base 4 and injector body 1.

In the closed position according to Fig. 1 and Figs. 2a, 3a and 4a housing 2 rests on base 4 and retention pegs 8 of base 4 pass through holes 10 on both sides of housing 2. Legs 6a of spring wire 6 engage shoulders 12 of pegs 8 (see Fig. 1a) so that pegs 8 are locked and housing 2 is latched in the closed position.

Portion 6b of spring wire 6 which is located at the rear side of the housing 2 is bent to form a bracket 14 for inserting the blade of a screwdriver. If the screw driver is turned, spring wire 6 is pushed in a position which may be best seen from Fig. 2b. During the movement of spring wire 6 into the position according to Fig. 2b also legs 6a move in the same direction. End portions 6c of legs 6a are bent by 90 degrees and slide on ramps 16 of housing 2. During the movement of spring wire 6 end portions 6c are forced to climb ramps 16 so that legs 6a of spring wire 6 move in a direction away from housing 2. Such movement forces legs 6a out engagement with shoulders 12, so that pegs 8 can pass holes 10 to clear housing 2. When the screw driver releases bracket 14, the spring wire 6 is automatically restored to its original rest position due to the energy stored in the spring.

End portions 6c of the spring wire legs 6a are further bent to form retaining hooks 6e (see Fig. 2b) which slide and travel in longitudinal grooves 18 of ramps 16. End walls 20 of grooves 18 form stops for hooks 6e so as to avoid a disassembly of the spring wire 6.

## Claims

1. A latching arrangement for latching a housing member to a base member, particularly a receptacle housing (2) to a fuel injector body (1), comprising a latching spring wire (6) at one of the members for releasable locking retention means of the other member,
the latching spring wire (6) is generally U-shaped and surrounds one of the members (2) such that the free legs (6a) of the spring wire (6) engage two opposite portions of the member (2) and lock the retention means (8) of the other member (4),
characterized in that
the spring wire (6) is movable in the axial direction of its free legs (6a) by inserting a tool between the spring wire portion (6b) connecting its legs (6a) and the member (2), and
that the ends (6c) of the spring wire (6) rest on ramps (16), such that the associated spring wire legs (6a) release the retention means (8) when the spring wire (6) is moved and its ends (6c) climb the ramps (16).

2. A latching arrangement according to claim 1
characterized in that
the retention means are pegs (8) of the base member (4) which pegs extend into holes (10) of the housing member (2) at opposite sides thereof and
that the spring wire legs (6a) engage shoulders (12) of the pegs (8) when the housing member (2) is in the closed position and are forced out of engagement when the ends of the spring wire legs (6a) climb the ramps (16).

3. A latching arrangement according to claim 2
characterized in that
the ends (6c) of the spring wire legs (6a) are bent by 90 degrees for resting and sliding on the ramps (16).

4. A latching arrangement according to claim 3
characterized in that
the ends of the spring wire legs (6a) are further bent to form retaining hooks (6e) travelling in longitudinal grooves (18) of the ramps (16), and end walls (20) of the grooves (18) form stops for the retaining hooks (6e), so as to avoid a disassembly of the spring wire (6) from the housing member (2).

5. A latching arrangement according to one of claims 1 to 4
characterized in that
the portion (6b) of the spring wire connecting its free legs (6a) is bent to form a bracket (14) for inserting the blade of a tool.

## Patentansprüche

1. Verrastungsanordnung zur Verrastung eines Gehäuseteils mit einem Basisteil, insbesondere einem Aufnahmegehäuse (2) für einen Kraftstoff-Einspritzkopf (1), mit einem Verrastungsfederdraht (6) an einem der Teile zur lösbaren Verrastung einer Halteeinrichtung an einem der Teile, wobei
der Verrastungsfederdraht (6) generell U-förmig ausgebildet ist und eines der Teile (2) umgibt, derart, daß die freien Schenkel (6a) des Federdrahts (6) zwei gegenüberliegende Abschnitte des einen Teil (2) berühren und die Halteeinrichtung (8) des anderen Teils (4) verrasten,
dadurch gekennzeichnet, daß
der Federdraht (6) durch Einsetzen eines Werkzeugs zwischen den seine Schenkel (6a) verbindenden Federdrahtabschnitt (6b) und das eine Teil (2) in axialer Richtung der freien Schenkel (6a) bewegbar ist, und
daß die Enden (6c) des Federdrahts (6) auf Rampen (16) ruhen, derart, daß die zugeordneten Federdrahtschenkel (6a) die Halteeinrichtung (8) freigeben, wenn der Federdraht (6) bewegt wird und seine Enden (6c) die Rampen (6) hinaufklettern.

2. Verrastungsanordnung nach Anspruch 1,
dadurch gekennzeichnet, daß die Verrastungseinrichtung Nocken (8) des Basisteils (4) sind, die sich in Öffnungen (10) an entgegengesetzten Seiten des Gehäuseteils (2) erstrecken, und daß die Federdrahtschenkel (6a) Schultern (12) der Nocken (8) berühren, wenn sich das Gehäuseteil (2) in der geschlossenen Position befindet, und außer Eingriff gebracht werden, wenn die Enden der Federdrahtschenkel (6a) die Rampen (16) hinaufklettern.

3. Verrastungsanordnung nach Anspruch 2,
dadurch gekennzeichnet, daß die Enden (6c) der Federdrahtschenkel (6a) um 90° abgebogen sind, um auf den Rampen (16) zu ruhen und zu gleiten.

4. Verrastungsanordnung nach Anspruch 3,
dadurch gekennzeichnet, daß die Enden der Federdrahtschenkel (6a) ferner unter Bildung von Haltehaken (6e) abgebogen sind, die sich in Längsnuten (18) der Rampen (16) bewegen, und daß Endwände (20) der Nuten (18) Stopstellen für die Haltehaken (6e) bilden, um eine Trennung des Federdrahts (6) vom Gehäuseteil (2) zu vermeiden.

5. Verrastungsanordnung nach einem der Ansprüche 1 bis 4,
dadurch gekennzeichnet, daß der die freien Schenkel (6a) des Federdrahts verbindende Abschnitt (6b) unter Bildung eines Bügels (14) zum Einsetzen der Klinge eines Werkzeugs gebogen sind.

## Revendications

1. Dispositif de verrouillage pour verrouiller un élément de boîtier sur un élément de base, en particulier un boîtier réceptacle (2) sur un corps d'injecteur de carburant (1), comprenant un fil à ressort de verrouillage (6) sur l'un des éléments comme moyen de fixation de blocage amovible de l'autre élément,
le ressort de verrouillage (6) est généralement en forme de U et entoure l'un des éléments (2) de sorte que les tiges libres (6a) du fil à ressort (6) s'engagent dans deux parties opposées de l'élément (2) et bloquent les moyens de fixation (8) de l'autre élément (4),
caractérisé en ce que
le fil à ressort (6) est déplaçable dans la direction axiale de ses tiges libres (6a) en insérant un outil entre la partie fil à ressort (6b) connectant ses tiges (6a) et l'élément (2), et
les extrémités (6c) du fil à ressort (6) reposent sur des rampes (16), de sorte que les tiges du fil à ressort associées (6a) libèrent les moyens de fixation (8) quand le fil à ressort (6) est déplacé et ses extrémités (6c) montent les rampes (16).

2. Dispositif de verrouillage selon la revendication 1,
caractérisé en ce que
les moyens de fixation sont des goupilles (8) de l'élément de base (4) dont les goupilles se prolongent dans les trous (10) de l'élément de boîtier (2) à des côtés opposés de celui-ci et
les tiges (6a) du fil à ressort s'engagent dans les épaulements (12) des goupilles (8) quand l'élément de boîtier (2) est en position fermée et sont désengagés quand les extrémités des tiges du fil à ressort (6a) montent les rampes (16).

3. Dispositif de verrouillage selon la revendication 2,
caractérisé en ce que
les extrémités (6c) des tiges du fil à ressort (6a) sont courbées à 90 degrés pour être au repos et glisser sur les rampes (16).

4. Dispositif de verrouillage selon la revendication 3,
caractérisé en ce que
les extrémités des tiges du fil à ressort (6a) sont davantage courbées pour former des crochets de retenue (6e) se déplaçant dans des rainures longitudinales (18) des rampes (16), et des parois d'extrémité (20) des rainures (18) forment des arrêts pour les crochets de retenue (6e), afin d'éviter le démontage du fil à ressort (6) de l'élément de boîtier (2).

5. Dispositif de verrouillage selon l'une quelconque des revendications 1 à 4, caractérisé en ce que
la partie (6b) du fil à ressort connectant ses tiges libres (6a) est courbée pour former un support (14) pour insérer la lame d'un outil.
